# EUROPÄISCHE PATENTSCHRIFT

(11) **EP 2 917 709 B1**
(45) Veröffentlichungstag und Bekanntmachung des Hinweises auf die Patenterteilung: **28.08.2019**
(21) Anmeldenummer: 13771122.2
(22) Anmeldetag: 27.09.2013
(51) Int. Cl.: G01K 1/08, G01K 7/22

(54) **TEMPERATURFÜHLER UND VERFAHREN ZUR HERSTELLUNG EINES TEMPERATURFÜHLERS**
TEMPERATURE PROBE AND METHOD FOR PRODUCING A TEMPERATURE PROBE
CAPTEUR DE TEMPÉRATURE ET PROCÉDÉ DE PRODUCTION D'UN CAPTEUR DE TEMPÉRATURE

(30) Priorität: 12.11.2012 DE 102012110845
(43) Veröffentlichungstag der Anmeldung: 16.09.2015
(73) Patentinhaber: TDK Electronics AG, 81671 München (DE)
(72) Erfinder: IHLE, Jan, A-8071 Grambach (AT); KLOIBER, Gerald, A-8073 Feldkirchen (AT)
(74) Vertreter: Epping - Hermann - Fischer
(86) Internationale Anmeldenummer: PCT/EP2013/070252
(87) Internationale Veröffentlichungsnummer: WO 2014/072125

(56) Entgegenhaltungen:
- EP-A1- 1 785 705
- DE-A1- 10 238 628
- DE-A1-102008 002 191
- FR-A1- 2 880 685

## Beschreibung

Es wird ein Temperaturfühler angegeben. Weiterhin wird ein Verfahren zur Herstellung eines Temperaturfühlers angegeben.

Die Messung von Temperaturen für die Überwachung und Regelung in unterschiedlichsten Anwendungen erfolgt beispielsweise mit keramischen Heißleiter-Thermistorelementen (NTC thermistor, "negative temperature coefficient thermistor"), Silizium-Temperatursensoren (zum Beispiel sogenannten KTY-Temperatursensoren), Platin-Temperatursensoren (PRTD, "platinum resistance temperature detector") oder Thermoelementen (TC, "Thermocouple"). Für eine ausreichende mechanische Stabilität, zum Schutz gegen äußere Einflüsse sowie zur Vermeidung von Korrosion durch aggressive Medien und zur Vermeidung von temperaturbedingten Materialveränderungen durch die Gasatmosphäre in einem NTC-Material beziehungsweise in einer Elektrode sind keramische Sensorelemente üblicherweise mit einem Überzug aus einem Polymer oder einem Glas versehen. Die maximalen Einsatztemperaturen solcher Sensorelemente sind im Fall einer Polymerumhüllung auf zirka 200 °C und im Fall einer Glasumhüllung auf zirka 500 °C bis 700 °C begrenzt.

Die beschriebenen Sensorelemente können jedoch nicht ohne Weiteres für die Messung von sehr hohen Temperaturen und/oder in besonders aggressiven Medien dauerhaft eingesetzt werden. Um dennoch einen Einsatz in aggressiven Medien vornehmen zu können, werden die Sensorelemente oftmals in ein Kunststoff- oder Edelstahlgehäuse verbaut. Zur Herstellung eines thermischen Kontakts zum Element werden zusätzlich sehr häufig Vergussmaterialien verwendet. Ein großer Nachteil der so aufgebauten Systeme ist deren verzögerte Ansprechzeit aufgrund der zusätzlichen konstruktionsbedingten Wärmeübergänge und der geringen Wärmeleitung der verwendeten Materialien. Ein besonderer Nachteil von Temperaturfühlern mit einer Polymer- oder Glasumhüllung ist deren stark schwankende und nicht eng tolerierbare Geometrie des Temperaturfühlerkopfes. Somit sind diese Temperaturfühler nicht für einen standardisierten Einbau geeignet.

Die DE 10 2008 002 191 A1 zeigt einen Temperatursensor, bei dem ein Thermistorelement in einem Schutzrohr aus Stahl angeordnet ist und von Formteilen aus Aluminumoxid umgeben ist. Die DE 102 38 628 A1, die EP 1 785 705 A1 und die FR 2 880 685 beschreiben weitere Temperatursensoren aufweisend metallische Gehäuse.

Es ist eine zu lösende Aufgabe zumindest einiger Ausführungsformen, einen Temperaturfühler anzugeben, der eine hohe Robustheit sowie eine geringe Ansprechzeit aufweist. Eine weitere Aufgabe zumindest einiger Ausführungsformen ist es, ein Verfahren zur Herstellung eines Temperaturfühlers anzugeben.

Diese Aufgaben werden durch einen Gegenstand und ein Verfahren gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Ein Temperaturfühler gemäß zumindest einer Ausführungsform weist ein funktionskeramisches Sensorelement und ein Keramikgehäuse auf. Das funktionskeramische Sensorelement ist vorzugsweise als keramisches Thermistorelement ausgeführt. Beispielsweise kann das funktionskeramische Sensorelement ein NTC-Thermistorelement (NTC, "negative temperature coefficient"), das heißt ein Heißleiter, sein. NTC-Thermistorelemente zeichnen sich insbesondere aufgrund ihrer geringen Herstellkosten aus. Ein weiterer Vorteil von NTC-Thermistorelementen beispielsweise gegenüber Thermoelementen oder metallischen Widerstandselementen, wie zum Beispiel Pt-Elementen, besteht in einer ausgeprägten negativen Widerstands-Temperatur-Charakteristik. Weiterhin ist es möglich, dass das funktionskeramische Sensorelement als PTC-Thermistorelement (PTC, "positive temperature coefficient"), das heißt als Kaltleiter, ausgeführt ist.

Das Sensorelement ist erfindungsgemäß derart im Keramikgehäuse angeordnet, dass zumindest eine Seitenfläche des Sensorelements einen direkten und formschlüssigen Kontakt zum Keramikgehäuse aufweist. Beispielsweise kann das funktionskeramische Sensorelement mehrere Seitenflächen aufweisen, wobei zumindest eine Seitenfläche ganzflächig in unmittelbarem Kontakt mit einer Innenwand des Keramikgehäuses steht. Vorzugsweise ist dabei die Innenwand des Keramikgehäuses in diesem Bereich in ihrer Form an die Seitenfläche des Sensorelements angepasst, so dass sich der formschlüssige Kontakt zwischen der Innenwand des Sensorelements und der Innenwand des Keramikgehäuses ergibt. Zwischen der in direktem und formschlüssigem Kontakt zum Keramikgehäuse stehenden Seitenfläche des Sensorelements und dem Keramikgehäuse sind insbesondere keine weiteren Elemente, wie zum Beispiel Vergussmaterialien oder Wärmeleitpasten, angeordnet.

Vorteilhafterweise weist der Temperaturfühler aufgrund des Keramikgehäuses und des formschlüssigen Verbundes zum funktionskeramischen Sensorelement sehr geringe Ansprechzeiten auf, die beispielsweise, abhängig von der Wandstärke und vom Material des Keramikgehäuses, bei unter drei Sekunden liegen. Die Ansprechzeiten können vorzugsweise unter eine Sekunde betragen, und, beispielsweise wenn das Keramikgehäuse sehr dünne Wandstärken aufweist, sogar bei wenigen Millisekunden liegen.

Gemäß einer weiteren Ausführungsform weist das Keramikgehäuse ein strukturkeramisches Material mit einer hohen Wärmeleitfähigkeit auf oder besteht aus einem solchen Material. Vorzugsweise weist das Keramikgehäuse Aluminiumoxid auf. Ein derartiges Keramikgehäuse zeichnet sich vorteilhafterweise durch eine besonders hohe Wärmeleitfähigkeit aus. Das Keramikgehäuse kann Aluminiumoxid unterschiedlicher Qualität aufweisen. Beispielsweise kann das Keramikgehäuse Aluminiumoxid mit einer Reinheit von zumindest 95 % bis 99,9 % oder mehr aufweisen. Dabei nehmen die Robustheit des Keramikgehäuses bezüglich der mechanischen Festigkeit und der chemischen Beständigkeit sowie die Wärmeleitfähigkeit mit der Reinheit des Materials zu. Gemäß einer besonders bevorzugten Ausführungsform besteht das Keramikgehäuse aus Aluminiumoxid. Alternativ kann das Keramikgehäuse ein anderes keramisches Material, wie zum Beispiel Aluminiumnitrid oder Siliciumcarbid, aufweisen oder daraus bestehen.

Gemäß einer weiteren Ausführungsform ist das Keramikgehäuse ein Spritzgussgehäuse. Das Keramikgehäuse kann insbesondere mittels keramischer Spritzgusstechnologie, beispielsweise mittels der so genannten keramischen Mikro-Spritzgusstechnologie, hergestellt sein. Mittels der keramischen Mikro-Spritzgusstechnologie können vorteilhafterweise sehr kleine an die Dimensionen des Sensorelements angepasste Gehäuseformen des Keramikgehäuses präzise, reproduzierbar und eine sehr hohe mechanische Festigkeit aufweisend hergestellt werden, wobei eine standardisierte Einbaugeometrie ermöglicht wird.

Erfindungsgemäß weist das Keramikgehäuse eine Öffnung auf, durch die das Keramikgehäuse halbseitig geöffnet ist. Erfindungsgemäß weist das Keramikgehäuse eine Kavität auf, die eine der Öffnung gegenüberliegende Bodenfläche mit einer stufenförmigen Vertiefung aufweist. Das Sensorelement ist erfindungsgemäß zumindest teilweise versenkt in der Vertiefung angeordnet. Die Vertiefung kann beispielsweise einen vertieften Bereich innerhalb der Kavität darstellen, wobei der vertiefte Bereich über eine Stufe mit dem Rest der Kavität verbunden ist. Vorzugsweise befindet sich zumindest eine Seitenfläche des Sensorelements in einem direkten und formschlüssigen Kontakt mit zumindest einem Teilbereich der Bodenfläche der Vertiefung.

Gemäß einer weiteren Ausführungsform weist das Keramikgehäuse ein der Öffnung gegenüberliegendes abgerundetes Ende an der Außenseite auf. Beispielsweise kann das der Öffnung gegenüberliegende Ende des Keramikgehäuses an der Außenseite einen teil- oder halbkugelförmigen Bereich aufweisen.

Gemäß einer weiteren Ausführungsform weist die Vertiefung einen Hauptbereich und zwei an zwei gegenüberliegende Seiten des Hauptbereichs angrenzende Seitentaschen auf. Vorzugsweise ist das Sensorelement zumindest teilweise im Hauptbereich angeordnet. Beispielsweise kann der Hauptbereich der Vertiefung hinsichtlich seiner Form und Größe derart an die Form und Größe des Sensorelements angepasst sein, dass das Sensorelement vollständig im Hauptbereich der Vertiefung angeordnet werden kann, wobei das Sensorelement den Hauptbereich möglichst vollständig ausfüllt. Die Seitentaschen weisen bevorzugt eine Tiefe von der Öffnung aus gesehen auf, die kleiner als eine Tiefe bis zur Bodenfläche des vertieften Bereichs der Vertiefung ist, der wie oben beschrieben über ein Stufe mit dem Rest der Vertiefung verbunden ist. Insbesondere kann der vertiefte Bereich bei einem Blick in die Öffnung zwischen den Seitentaschen angeordnet sein.

Erfindungsgemäß weist der Temperaturfühler zwei Kontaktelemente auf. Jedes der Kontaktelemente ist erfindungsgemäß zumindest teilweise in einer der an den Hauptbereich angrenzenden Seitentaschen angeordnet. Weiterhin sind die Kontaktelemente erfindungsgemäß elektrisch leitend mit dem Sensorelement verbunden. Die Seitentaschen können beispielsweise hinsichtlich ihrer Form und Größe an einen Durchmesser der Kontaktelemente angepasst sein, sodass die Kontaktelemente zumindest teilweise in die Seitentaschen eingesteckt werden können. Weiterhin ragen die Kontaktelemente aus dem Keramikgehäuse heraus. Vorzugsweise weisen die Kontaktelemente temperaturstabile Materialien mit einer geringen Korrosionsneigung auf. Beispielsweise können die Kontaktelemente edle Metalle wie zum Beispiel Platin, Gold, Silber oder hochtemperaturstabile Stahllegierungen, vorzugsweise mit hohen Gehalten an Chrom und/oder Nickel aufweisen oder aus einem dieser Materialien bestehen.

Gemäß einer weiteren Ausführungsform sind die Kontaktelemente als Anschlussdrähte ausgeführt. Beispielsweise können die Kontaktelemente in Form von mit Nickel ummantelten Kupferdrähten oder mit einem oder mehreren der anderen vorab genannten Metalle ausgebildet sein.

Gemäß einer weiteren Ausführungsform weist das Sensorelement zwei Elektroden auf. Die Elektroden sind vorzugsweise auf zwei gegenüberliegenden Seitenflächen des Sensorelements aufgebracht. Vorzugsweise sind die Kontaktelemente jeweils mittels einer in den Seitentaschen angeordneten, eingebrannten Metallisierungspaste mit einer der Elektroden des Sensorelements elektrisch leitend verbunden. Dabei können Enden der Kontaktelemente jeweils in die in den Seitentaschen eingebrachten Metallisierungspasten eingebettet sein. Die Elektroden des Sensorelements können beispielsweise, abhängig von der maximalen Einsatztemperatur des Temperaturfühlers, Metalle, zum Beispiel Platin, Gold, Silber, oder Metalllegierungen, zum Beispiel Silber-Palladium, aufweisen oder daraus bestehen. Die der elektrischen Kontaktierung zwischen den Kontaktelementen und den Elektroden des Sensorelements dienenden Metallisierungspasten weisen vorzugsweise edle Metalle wie zum Beispiel Gold, Silber oder Platin auf oder bestehen daraus. Weiterhin können die Metallisierungspasten Kupfer, Molybdän oder Wolfram oder eine Metalllegierung, zum Beispiel Silber-Palladium, aufweisen oder daraus bestehen.

Gemäß einer weiteren Ausführungsform ist die Öffnung des Keramikgehäuses mittels einer Glasversiegelung verschlossen. Vorzugsweise ragen die Kontaktelemente aus der Glasversiegelung heraus und reichen somit vom Inneren der Öffnung durch die Glasversiegelung nach außen. Die Glasversiegelung weist beispielsweise alkali- und/oder schwermetalloxidfreie Gläser mit einem an das Material des Keramikgehäuses angepassten Ausdehnungskoeffizienten auf. Vorteilhafterweise weist das für die Glasversiegelung verwendete Material einen Erweichungspunkt auf, der mindestens 50 °C über einer maximalen Einsatztemperatur des Temperaturfühlers liegt.

Gemäß einer weiteren Ausführungsform weist das Sensorelement eine Perowskitstruktur umfassend die Elemente Y, Ca, Cr, Al, O auf. Weiterhin kann das Sensorelement auf Basis von Perowskiten das Element Sn aufweisen.

Gemäß einer weiteren Ausführungsform weist das Sensorelement ein Keramikmaterial mit einer Perowskitstruktur der allgemeinen chemischen Formel ABO₃ auf. Insbesondere für hochtemperaturstabile Temperaturfühler, die für hohe Anwendungstemperaturen geeignet sein sollen, werden derartige Sensorelemente bevorzugt. Besonders bevorzugt weist das funktionskeramische Sensorelement die Zusammensetzung (Y₁₋ₓCaₓ)(Cr_{1-y}Al_{y})O₃ mit x = 0,03 bis 0, 05 und y = 0,85 auf.

Gemäß einer weiteren Ausführungsform weist das Sensorelement eine Spinellstruktur umfassend die Elemente Ni, Co, Mn, O auf. Das Sensorelement auf Basis von Spinellen kann weiterhin eines oder mehrere der folgenden Elemente aufweisen: Al, Fe, Cu, Zn, Ca, Zr, Ti, Mg.

Gemäß einer weiteren Ausführungsform weist das Sensorelement ein Keramikmaterial mit einer Spinellstruktur der allgemeinen chemischen Formel AB₂O₄ beziehungsweise B(A,B)O₄ auf. Derartige Sensorelemente werden insbesondere bei geringen Anwendungstemperaturen bevorzugt. Gemäß einer besonders bevorzugten Ausführungsform weist das funktionskeramische Sensorelement die Zusammensetzung Co_{3-(x+y)}NiₓMn_{y}O₄ mit x = 1,32 und y = 1,32 auf.

Gemäß einer weiteren Ausführungsform weist das Keramikgehäuse Wandstärken zwischen 0,1 mm und 1 mm auf. Das kann insbesondere bedeuten, dass das halbseitig geöffnete Keramikgehäuse zumindest eine Gehäusewand aufweist, die Dicken zwischen 0,1 mm und 1 mm aufweist. Bevorzugt weist das Keramikgehäuse überall Wandstärken im genannten Bereich auf. Gemäß einer besonders bevorzugten Ausführungsform weist das Keramikgehäuse Wandstärken zwischen 0,3 mm und 0,7 mm auf. Durch derartige Wandstärken des Keramikgehäuses kann eine besonders geringe Ansprechzeit des Temperaturfühlers erzielt werden.

Vorteilhafterweise weist der hier beschriebene Temperaturfühler sehr kurze Ansprechzeiten, eine sehr hohe mechanische sowie chemische Robustheit und eine sehr gute Langzeitstabilität auf. Weitere Vorteile liegen in einer sehr präzisen Ausführung der Keramikgehäusedimension, die eine einfache und standardisierte Montage ohne zusätzliche Systemelemente ermöglicht.

Weiterhin wird ein Verfahren zur Herstellung eines Temperaturfühlers angegeben. Der dadurch herstellbare oder hergestellte Temperaturfühler kann eines oder mehrere Merkmale der vorgenannten Ausführungsformen aufweisen. Die vorher und im Folgenden beschriebenen Ausführungsformen gelten gleichermaßen für den Temperaturfühler wie auch für das Verfahren zur Herstellung des Temperaturfühlers.

Gemäß einer Ausführungsform werden zur Herstellung des Temperaturfühlers ein keramisches Ausgangsmaterial sowie ein mit Elektroden versehenes funktionskeramisches Sensorelement bereitgestellt. Das funktionskeramische Sensorelement kann beispielsweise ein NTC- oder PTC-Thermistorelement sein. Das keramische Ausgangsmaterial kann beispielsweise ein so genannter keramischer Feedstock sein, der ein strukturkeramisches Pulver, wie zum Beispiel ein Aluminiumoxidpulver, und ein organisches Bindemittel aufweist. Das Ausgangsmaterial wird mittels eines Spritzgussverfahrens in eine entsprechende Form gespritzt. Vorzugsweise werden die daraus entstehenden sogenannten Grünkörper anschließend in einem Entbinderungsprozess, der zweistufig, das heißt wässrig und thermisch, oder einstufig, das heißt nur thermisch, ist, weitgehend vom organischen Anteil befreit. Nachfolgend werden die entbinderten Körper bei einer geeigneten Temperatur zu einem Keramikgehäuse versintert. Beispielsweise erfolgt das Versintern im Falle von Aluminiumoxid, abhängig von der Reinheit des Materials, bei Temperaturen zwischen 1600 °C bis 1700 °C. Weiterhin wird das bereitgestellte Sensorelement im so hergestellten Keramikgehäuse derart angeordnet, dass zumindest eine Seitenfläche des Sensorelements einen direkten und formschlüssigen Kontakt zum Keramikgehäuse aufweist.

Gemäß einer weiteren Ausführungsform werden die Kontaktelemente nach dem Anordnen des Sensorelements im Keramikgehäuse jeweils mittels einer Metallisierungspaste elektrisch leitend mit den Elektroden des Sensorelements verbunden. Beispielsweise können die Metallisierungspasten in die Seitentaschen der Vertiefung eindosiert werden und die Kontaktelemente anschließend in die Seitentaschen eingebracht werden, so dass Enden der Kontaktelemente jeweils in der Metallisierungspaste eingebettet sind. Vorzugsweise wird die Metallisierungspaste anschließend bei einer geeigneten Temperatur, die vom verwendeten Material der Metallisierungspaste abhängig ist, eingebrannt.

Gemäß einer weiteren Ausführungsform wird die Öffnung des Keramikgehäuses mittels einer Glaspaste verschlossen. Anschließend wird die Glaspaste bei einer geeigneten Temperatur eingebrannt. Vorzugsweise ist das für die Glaspaste verwendete Glasmaterial auf die zukünftige Einsatztemperatur des Temperaturfühlers abgestimmt und weist einen Erweichungspunkt T_{G} von mindestens 50 °C über der maximalen Einsatztemperatur des Temperaturfühlers auf.

Gemäß einer weiteren Ausführungsform wird zur Einstellung einer geringen Widerstandstoleranz durch einen nachfolgenden Temperprozess der Widerstand der Elemente in begrenztem Umfang nachjustiert.

Weitere Vorteile und vorteilhafte Ausführungsformen des Temperaturfühlers ergeben sich aus den im Folgenden in Verbindung mit den Figuren 1 bis 6 beschriebenen Ausführungsformen.

Es zeigen:
- Figuren 1 und 2: schematische Ansichten eines Temperaturfühlers gemäß einem Ausführungsbeispiel,
- Figur 3: eine Schnittdarstellung eines Temperaturfühlers gemäß einem weiteren Ausführungsbeispiel,
- Figur 4: eine schematische Ansicht eines Keramikgehäuses eines Temperaturfühlers gemäß einem weiteren Ausführungsbeispiel,
- Figur 5: eine schematische Darstellung eines Temperaturfühlers in Form einer Explosionsdarstellung gemäß einem weiteren Ausführungsbeispiel und
- Figur 6: ein Verfahren zur Herstellung eines Temperaturfühlers gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente, wie zum Beispiel Schichten, Bauteile und Bereiche zur besseren Darstellbarkeit und/oder zum besseren Verständnis übertrieben dick oder groß dimensioniert dargestellt sein.

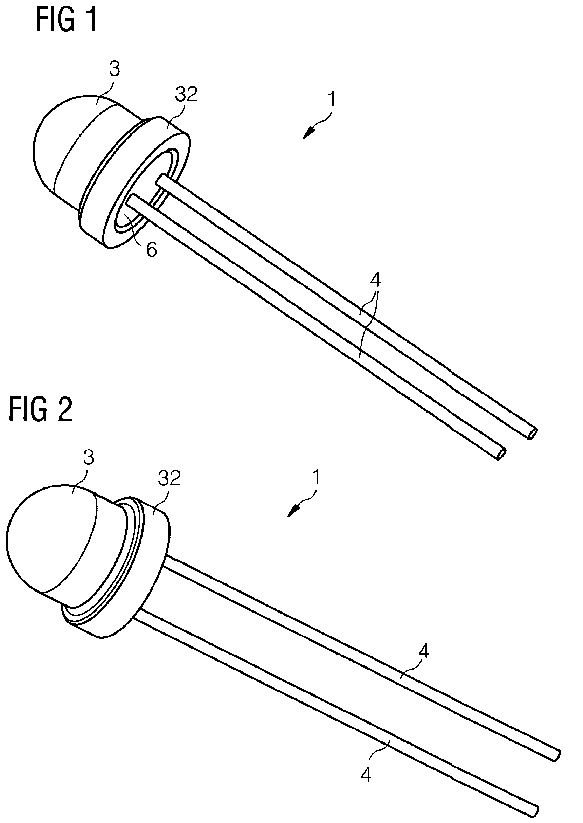

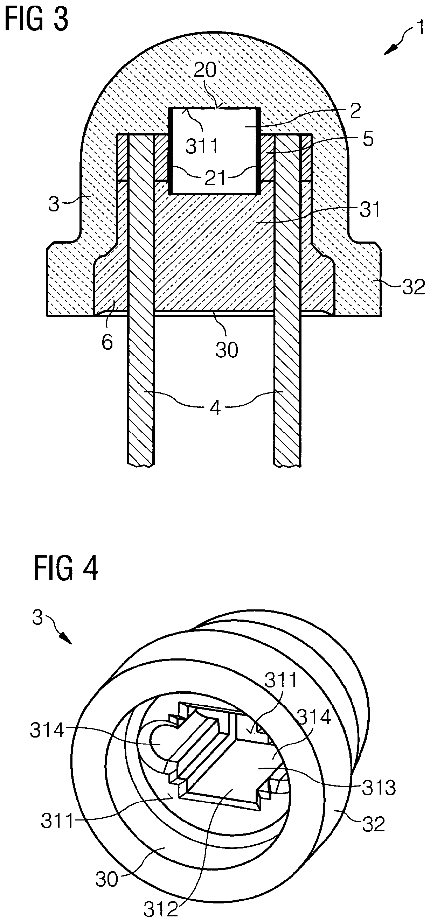

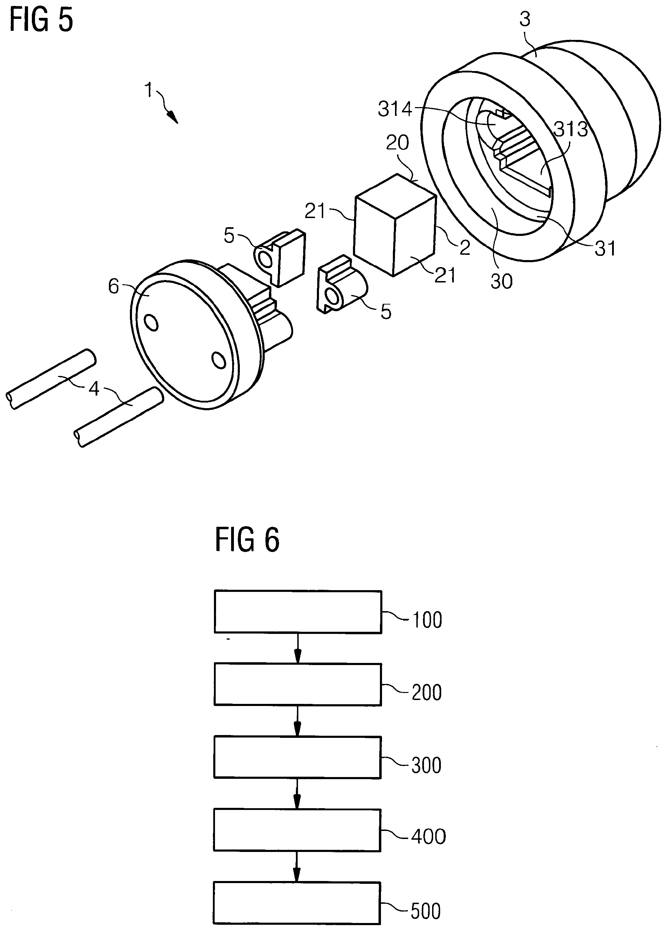

Die Figuren 1 und 2 zeigen verschiedene schematische Ansichten eines hier beschriebenen Temperaturfühlers 1 gemäß einem Ausführungsbeispiel. Die in den Figuren 1 und 2 nicht dargestellten Elemente des Temperaturfühlers 1 sind in der Schnittansicht des Temperaturfühlers 1 in Figur 3, in der schematischen Darstellung des Keramikgehäuses 3 in Figur 4 sowie in der Explosionsdarstellung des Temperaturfühlers 1 in Figur 5 gezeigt. Die nachfolgende Beschreibung bezieht sich gleichermaßen auf die Figuren 1 bis 5.

Der Temperaturfühler 1 weist ein funktionskeramisches Sensorelement 2, das als NTC-Thermistorelement ausgeführt ist, und ein Keramikgehäuse 3 auf. Das funktionskeramische Sensorelement 2 ist derart im Keramikgehäuse 3 angeordnet, dass eine Seitenfläche 20 des Sensorelements 2 einen direkten und formschlüssigen Kontakt zum Keramikgehäuse 3, insbesondere zu einer Bodenfläche 311 des Keramikgehäuses 3, aufweist. Das Keramikgehäuse 3 weist Aluminiumoxid mit einer Reinheit von größer oder gleich 95 % auf und ist als Spritzgussgehäuse ausgeführt, das mittels der sogenannten keramischen Mikro-Spritzgusstechnologie hergestellt ist. Alternativ kann das Keramikgehäuse 3 ein oder mehrere andere, vorzugsweise gut wärmeleitende, Keramikmaterialien aufweisen.

Das funktionskeramische Sensorelement weist eine Keramik mit einer Perowskitstruktur auf. Insbesondere weist die Keramik des Sensorelements eine Zusammensetzung nach der Formel (Y₁₋ₓCaₓ)(Cr_{1-y}Al_{y})O₃ mit x = 0,03 bis 0,05 und y = 0,85 auf. Dadurch eignet sich der Temperaturfühler 1 besonders für Hochtemperaturanwendungen. Alternativ kann das Sensorelement, insbesondere bei geringeren Anwendungstemperaturen des Temperaturfühler 1, eine Keramik mit einer Spinellstruktur aufweisen. Beispielsweise kann die Keramik des Sensorelements eine Zusammensetzung gemäß der Formel Co_{3-(x+y)}NiₓMn_{y}O₄ mit x = 1,32 und y = 1,32 aufweisen.

Das Keramikgehäuse 3 weist eine Öffnung 30 auf, durch die das Keramikgehäuse 3 halbseitig geöffnet ist. Innerhalb des Keramikgehäuses 3 ist eine Kavität 31 ausgebildet, die eine der Öffnung 30 gegenüberliegende Bodenfläche 311 mit einer stufenförmigen Vertiefung 312 aufweist. Das funktionskeramische Sensorelement 2 ist zumindest teilweise versenkt in der Vertiefung 312 angeordnet. Insbesondere ist das Sensorelement 2 in einem Hauptbereich 313 der Vertiefung 312, der hinsichtlich Form und Größe an eine Länge und Breite des Sensorelements 2 angepasst ist, angeordnet. An den Hauptbereich 313 der Vertiefung 312 grenzt an zwei gegenüberliegende Seiten des Hauptbereichs 313 jeweils eine Seitentasche 314 an. Die Seitentaschen 314 sind ebenso wie der Hauptbereich 313 vertiefte Bereiche innerhalb der Kavität 31. Bei einem Blick in die Öffnung 30 hinein weist der Hauptbereich 313 zwischen den Seitentaschen 314 einen vertieften Bereich auf, der stufenförmig an die übrigen Bereiche der Kavität 31 angrenzt und dessen Bodenfläche 311 von der Öffnung 30 aus gesehen eine größere Tiefe als die Seitentaschen 314 aufweisen.

Der Temperaturfühler 1 weist zwei Kontaktelemente 4 auf, die als Anschlussdrähte ausgebildet sind und jeweils zumindest teilweise in einer der Seitentaschen 314 angeordnet sind. Mit ihrem jeweiligen anderen Ende ragen die Kontaktelemente 4 aus dem Keramikgehäuse 3 heraus und dienen so der externen Kontaktierung des Temperaturfühlers 1. Die Kontaktelemente 4 weisen Platin auf. Alternativ können die Kontaktelemente 4 Gold, Silber oder andere edle Metalle, oder aber Legierungen, vorzugsweise hochtemperaturstabile Stahllegierungen, beispielsweise mit hohen Gehalten an Chrom und/oder Nickel aufweisen oder daraus bestehen.

Das Sensorelement 2 weist auf zwei gegenüberliegenden Seitenflächen jeweils eine Elektrode 21 auf. Die Elektroden 21 des Sensorelements 2 weisen Platin auf. Alternativ können die Elektroden 21 Gold oder Silber oder Silber-Palladium aufweisen oder daraus bestehen. Die Kontaktelemente 4 sind jeweils mittels einer eingebrannten Metallisierungspaste 5, die in den Seitentaschen 314 angeordnet sind, mit jeweils einer der Elektroden 21 des Sensorelements 2 elektrisch leitend verbunden. Die Metallisierungspasten 5 dienen sowohl der Fixierung der Kontaktelemente 4 innerhalb der Seitentaschen 314 als auch der elektrischen Kontaktierung zwischen den Kontaktelementen 4 und den Elektroden 21 des Sensorelements 2. Im gezeigten Ausführungsbeispiel weisen die Metallisierungspasten 5 Gold auf. Alternativ können die Metallisierungspasten 5 Silber, Platin, Kupfer, Molybdän oder Wolfram oder Silber-Palladium aufweisen oder daraus bestehen.

Das Keramikgehäuse 3 weist ein der Öffnung gegenüberliegendes abgerundetes Ende an der Außenseite auf. Weiterhin weist das Keramikgehäuse 3 einen an die Öffnung 30 angrenzenden Vorsprung 32 auf. Der Vorsprung 32 ist als umlaufender Bund ausgeführt und kann beispielsweise dazu dienen, den Temperaturfühler 1 in einem hülsenförmigen Element eines Temperatursensorsystems innerhalb einer Öffnung des hülsenförmigen Elements anzuordnen.

Weiterhin ist das Keramikgehäuse 3 rückseitig mittels einer Glasversiegelung 6 verschlossen, durch die die Kontaktelemente 4 hindurch ragen. Der Temperaturfühler 1 zeichnet sich aufgrund seines Aufbaus und der verwendeten Materialien insbesondere durch eine gute Langzeit-Medienbeständigkeit, eine hohe Robustheit und eine sehr geringe Ansprechzeit aus.

Das Sensorelement 2 des Temperaturfühlers 1 weist Abmessungen von ca. 0,85 mm x 0,7 mm x 0,7 mm auf. Das Keramikgehäuse 3 des Temperaturfühlers 1 weist maximale äußere Abmessungen von ca. 2,5 mm x 2,3 mm (Durchmesser x Höhe) auf. Weiterhin weist das Keramikgehäuse 3 Wandstärken zwischen 0,1 mm und 1 mm auf. Die Länge des Temperaturfühlers 1 einschließlich der Kontaktelemente 4 beträgt ca. 10,8 mm.

Der Temperaturfühler 1 bietet vorteilhafterweise sowohl eine besonders stabile Ummantelung des Sensorelements 2 als auch eine besonders geringe Ansprechzeit. Weiterhin zeichnet sich der hier gezeigte keramisch gekapselte Temperaturfühler 1 für den Einsatz bei hohen Anwendungstemperaturen in besonders aggressiven Medien beziehungsweise Gasen aus.

Figur 6 zeigt ein Verfahren zur Herstellung eines hier beschriebenen Temperaturfühlers 1 gemäß einem Ausführungsbeispiel. Dabei werden in einem ersten Schritt 100 ein keramisches Ausgangsmaterial und ein funktionskeramisches Sensorelement 2, das mit Elektroden 21 versehen ist, bereitgestellt. Anschließend wird in einem weiteren Verfahrensschritt 200 das keramisches Ausgangsmaterial mittels eines keramischen Spritzgussverfahrens zu einem Grünkörper geformt und anschließend wird der Grünkörper zu einem Keramikgehäuse 3 versintert. Vorzugsweise wird der Grünkörper dabei vor dem Versintern mittels eines ein- oder zweistufigen Entbinderungsprozesses von organischen Anteilen befreit.

In einem weiteren, nachfolgenden Verfahrensschritt 300 wird das Sensorelement 2 derart im Keramikgehäuse 3 angeordnet, dass zumindest eine Seitenfläche 20 des Sensorelements 2 einen direkten formschlüssigen Kontakt zum Keramikgehäuse aufweist. Anschließend wird in einem weiteren Verfahrensschritt 400 eine Metallisierungspaste 5 in Seitentaschen 314 des Keramikgehäuses 3 eingebracht und danach werden Kontaktelemente 4 in den Seitentaschen 314 angeordnet, so dass Enden der Kontaktelemente 4 in den Metallisierungspasten 5 eingebettet sind. Danach wird die Metallisierungspaste eingebrannt. Dadurch wird ein elektrisch leitender Kontakt zwischen den Kontaktelementen 4 und den Elektroden 21 des Sensorelements 2 hergestellt. In einem nachfolgenden Verfahrensschritt 500 werden das Keramikgehäuse 3 rückseitig mittels einer Glaspaste 6 verschlossen und die Glaspaste 6 anschließend eingebrannt.

Die in den Figuren gezeigten Ausführungsbeispiele können alternativ oder zusätzlich weitere Merkmale gemäß den Ausführungsformen der allgemeinen Beschreibung aufweisen.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

### Bezugszeichenliste

- 1: Temperaturfühler
- 2: Sensorelement
- 20: Seitenfläche
- 21: Elektrode
- 3: Keramikgehäuse
- 30: Öffnung
- 31: Kavität
- 311: Bodenfläche
- 312: Vertiefung
- 313: Hauptbereich
- 314: Seitentasche
- 32: Vorsprung
- 4: Kontaktelement
- 5: Metallisierungspaste
- 6: Glasversiegelung
- 100, 200, 300, 400, 500: Verfahrensschritt

## Patentansprüche

1. Temperaturfühler (1), aufweisend ein funktionskeramisches Sensorelement (2) und ein Keramikgehäuse (3), wobei das Sensorelement (2) derart im Keramikgehäuse (3) angeordnet ist, dass zumindest eine Seitenfläche (20) des Sensorelements (2) einen direkten und formschlüssigen Kontakt zum Keramikgehäuse (3) aufweist, und aufweisend zwei Kontaktelemente (4) zur Kontaktierung des Sensorelements (2), die an gegenüberliegenden Seiten des Sensorelements (2) angeordnet sind, **dadurch gekennzeichnet, dass** das Keramikgehäuse (3) eine Kavität (31) mit einer Vertiefung aufweist, wobei das Sensorelement (2) zumindest teilweise versenkt in der Vertiefung angeordnet ist und wobei die Kontaktelemente (4) in einer Ansicht auf die Vertiefung seitlich von der Vertiefung angeordnet sind und nicht in die Vertiefung hineinreichen.

2. Temperaturfühler nach Anspruch 1,
bei dem das Sensorelement (2) mit Elektroden (21) versehen ist und bei dem die Kontaktelemente (4) mit den Elektroden (21) mittels einer eingebrannten Metallisierungspaste (5) elektrisch leitend verbunden sind.

3. Temperaturfühler nach Anspruch 2,
bei dem Enden der Kontaktelemente (4) in die Metallisierungspaste (5) eingebettet sind.

4. Temperaturfühler nach einem der Ansprüche 2 oder 3,
bei dem die Metallisierungspaste (5) zusätzlich zur elektrischen Kontaktierung zur Fixierung der Kontaktelemente (4) im Keramikgehäuse (3) ausgebildet ist.

5. Temperaturfühler nach einem der vorhergehenden Ansprüche,
- wobei das Keramikgehäuse (3) eine Öffnung (30) aufweist, durch die das Keramikgehäuse (3) halbseitig geöffnet ist.

6. Temperaturfühler nach Anspruch 5,
- wobei die Vertiefung (312) einen Hauptbereich (313) und zwei an zwei gegenüberliegende Seiten des Hauptbereichs (313) angrenzende Seitentaschen (314) aufweist,
- und wobei das Sensorelement (2) zumindest teilweise im Hauptbereich (313) angeordnet ist.

7. Temperaturfühler nach Anspruch 6,
- wobei jedes der Kontaktelemente (4) zumindest teilweise in einer der Seitentaschen (314) angeordnet ist und elektrisch leitend mit dem Sensorelement (2) verbunden ist und
- wobei die Kontaktelemente (4) aus dem Keramikgehäuse (3) herausragen.

8. Temperaturfühler nach Anspruch 7,
- wobei das Sensorelement (2) zwei Elektroden (21) aufweist und
- wobei die Kontaktelemente (4) jeweils mittels einer in den Seitentaschen (314) angeordneten, eingebrannten Metallisierungspaste (5) mit einer Elektrode (21) des Sensorelements (2) elektrisch leitend verbunden sind.

9. Temperaturfühler nach einem der vorhergehenden Ansprüche, wobei die Öffnung des Keramikgehäuses (3) mittels einer Glasversiegelung (6) verschlossen ist.

10. Temperaturfühler nach einem der vorhergehenden Ansprüche, wobei das funktionskeramische Sensorelement (2) ein NTC-Element oder ein PTC-Element ist.

11. Temperaturfühler nach einem der vorhergehenden Ansprüche, wobei das Keramikgehäuse (3) Wandstärken zwischen 0,1 mm und 1 mm aufweist.

12. Verfahren zur Herstellung eines Temperaturfühlers (1) nach einem der Ansprüche 1 bis 11 mit den folgenden Schritten:
- Bereitstellen eines keramischen Ausgangsmaterials, eines mit Elektroden (21) versehenen funktionskeramischen Sensorelements (2) sowie zweier Kontaktelemente (4) zur Kontaktierung des Sensorelements (2),
- Ausformen des keramischen Ausgangsmaterials zu einem Grünkörper mittels eines Spritzgussverfahrens und Versinterung des Grünkörpers zu einem Keramikgehäuse (3), wobei das Keramikgehäuse (3) eine Kavität (31) mit einer Vertiefung aufweist,
- Anordnen des Sensorelements (2) im Keramikgehäuse (3) derart, dass das Sensorelement (2) zumindest teilweise versenkt in der Vertiefung angeordnet ist, und zumindest eine Seitenfläche (20) des Sensorelements (2) einen direkten und formschlüssigen Kontakt zum Keramikgehäuse (3) aufweist,
- Anordnen der Kontaktelemente (4) an gegenüberliegenden Seiten des Sensorelements (2), so dass die Kontaktelemente (4) in einer Ansicht auf die Vertiefung seitlich von der Vertiefung angeordnet sind und nicht in die Vertiefung hineinreichen.

13. Verfahren nach Anspruch 12, wobei die Kontaktelemente (4) nach dem Anordnen des Sensorelements (2) im Keramikgehäuse (3) jeweils mittels einer Metallisierungspaste (5) elektrisch leitend mit den Elektroden (21) verbunden werden und die Metallisierungspasten (5) anschließend eingebrannt werden.

14. Verfahren nach einem der Ansprüche 12 oder 13, wobei eine Öffnung (30) des Keramikgehäuses (3) mittels einer Glaspaste (6) verschlossen wird und die Glaspaste (6) anschließend eingebrannt wird.

## Claims

1. Temperature probe (1), having a functional ceramic sensor element (2) and a ceramic housing (3), wherein the sensor element (2) is arranged in such a way in the ceramic housing (3) that at least one side face (20) of the sensor element (2) is in direct and form-locked contact with the ceramic housing (3), and having two contact elements (4) for contacting the sensor element (2), which are arranged on opposing sides of the sensor element (2),
**characterized in that**
the ceramic housing (3) has a cavity (31) with a recess, wherein the sensor element (2) is arranged at least partly recessed in the recess and wherein the contact elements (4), in a view onto the recess, are arranged to the sides of the recess and do not extend into the recess.

2. Temperature probe according to Claim 1,
in which the sensor element (2) is provided with electrodes (21) and in which the contact elements (4) are electrically conductively connected with the electrodes (21) by means of a fired metallization paste (5) .

3. Temperature probe according to Claim 2,
in which ends of the contact elements (4) are embedded in the metallization paste (5).

4. Temperature probe according to one of Claims 2 or 3,
in which the metallization paste (5) is designed, in addition to electrical contacting, for fixing the contact elements (4) in the ceramic housing (3).

5. Temperature probe according to one of the preceding claims,
- wherein the ceramic housing (3) has an opening (30), as a result of which the ceramic housing (3) is open on one side.

6. Temperature probe according to Claim 5,
- wherein the recess (312) has a main region (313) and two side pockets (314) adjoining two opposing sides of the main region (313),
- and wherein the sensor element (2) is arranged at least in part in the main region (313).

7. Temperature probe according to Claim 6,
- wherein each of the contact elements (4) is arranged at least in part in one of the side pockets (314) and is connected electrically conductively with the sensor element (2) and
- wherein the contact elements (4) project out of the ceramic housing (3).

8. Temperature probe according to Claim 7,
- wherein the sensor element (2) has two electrodes (21) and
- wherein the contact elements (4) are each electrically conductively connected with an electrode (21) of the sensor element (2) by means of a fired metallization paste (5) arranged in the side pockets (314).

9. Temperature probe according to one of the preceding claims,
wherein the opening of the ceramic housing (3) is closed by means of a glass seal (6).

10. Temperature probe according to one of the preceding claims,
wherein the functional ceramic sensor element (2) is an NTC element or a PTC element.

11. Temperature probe according to one of the preceding claims,
wherein the ceramic housing (3) has wall thicknesses of between 0.1 mm and 1 mm.

12. Method for producing a temperature probe (1) according to one of Claims 1 to 11, having the following steps:
- providing a ceramic starting material, a functional ceramic sensor element (2) provided with electrodes (21), and two contact elements (4) for contacting the sensor element (2),
- shaping the ceramic starting material into a green body using an injection moulding method and sintering the green body to yield a ceramic housing (3), wherein the ceramic housing (3) has a cavity (31) with a recess,
- arranging the sensor element (2) in the ceramic housing (3) in such a way that the sensor element (2) is arranged at least partly recessed in the recess, and at least one side face (20) of the sensor element (2) is in direct and form-locked contact with the ceramic housing (3),
- arranging the contact elements (4) on opposing sides of the sensor element (2), such that the contact elements (4), in a view onto the recess, are arranged to the sides of the recess and do not extend into the recess.

13. Method according to Claim 12,
wherein, after arrangement of the sensor element (2) in the ceramic housing (3), the contact elements (4) are each electrically conductively connected with the electrodes (21) by means of a metallization paste (5) and the metallization pastes (5) are then fired.

14. Method according to one of Claims 12 or 13,
wherein an opening (30) in the ceramic housing (3) is closed by means of a glass paste (6) and the glass paste (6) is then fired.

## Revendications

1. Sonde de température (1), présentant un élément capteur (2) céramique fonctionnel et un logement en céramique (3), l'élément capteur (2) étant disposé dans le logement en céramique (3) de manière telle qu'au moins une surface latérale (20) de l'élément capteur (2) présente un contact direct et par complémentarité de forme avec le logement en céramique (3), et présentant deux éléments de contact (4), pour la mise en contact de l'élément capteur (2), qui sont disposés sur des côtés opposés de l'élément capteur (2),
**caractérisé en ce que**
le logement en céramique (3) présente une cavité (31) pourvue d'un creux, l'élément capteur (2) étant disposé dans le creux tout en étant partiellement enfoncé dans celui-ci et les éléments de contact (4), dans une vue sur le creux, étant disposés latéralement par rapport au creux et ne pénétrant pas dans le creux.

2. Sonde de température selon la revendication 1,
dans laquelle l'élément capteur (2) est pourvu d'électrodes (21) et dans laquelle les éléments de contact (4) sont raccordés de manière électriquement conductrice aux électrodes (21) au moyen d'une pâte de métallisation cuite (5) .

3. Sonde de température selon la revendication 2,
dans laquelle les extrémités des éléments de contact (4) sont intégrées dans la pâte de métallisation (5).

4. Sonde de température selon l'une quelconque des revendications 2 ou 3, dans laquelle la pâte de métallisation (5), en plus d'être conçue pour le contact électrique, est conçue pour la fixation des éléments de contact (4) dans le logement en céramique (3).

5. Sonde de température selon l'une quelconque des revendications précédentes,
- le logement en céramique (3) présentant une ouverture (30) par laquelle le logement en céramique (3) est semi-ouvert.

6. Sonde de température selon la revendication 5,
- le creux (312) présentant une zone principale (313) et deux poches latérales (314) adjacentes à la zone principale (313) sur deux côtés opposés,
- et l'élément capteur (2) étant disposé au moins partiellement dans la zone principale (313).

7. Sonde de température selon la revendication 6,
- chacun des éléments de contact (4) étant disposé au moins partiellement dans l'une des poches latérales (314) et raccordé de manière électriquement conductrice à l'élément capteur (2) et
- les éléments de contact (4) dépassant du logement en céramique (3).

8. Sonde de température selon la revendication 7,
- l'élément capteur (2) présentant deux électrodes (21) et
- les éléments de contact (4) étant à chaque fois raccordés de manière électriquement conductrice à une électrode (21) de l'élément capteur (2) au moyen d'une pâte de métallisation (5) cuite, disposée dans les poches latérales (314).

9. Sonde de température selon l'une quelconque des revendications précédentes, l'ouverture du logement en céramique (3) étant fermée au moyen d'un scellement en verre (6) .

10. Sonde de température selon l'une quelconque des revendications précédentes, l'élément capteur (2) céramique fonctionnel étant un élément NTC ou un élément PTC.

11. Sonde de température selon l'une quelconque des revendications précédentes, le logement en céramique (3) présentant des épaisseurs de paroi entre 0,1 mm et 1 mm.

12. Procédé pour la fabrication d'une sonde de température (1) selon l'une quelconque des revendications 1 à 11, présentant les étapes suivantes :
- mise à disposition d'un matériau de départ céramique, d'un élément capteur (2) céramique fonctionnel pourvu d'électrodes (21) ainsi que de deux éléments de contact (4) pour la mise en contact de l'élément capteur (2),
- façonnage du matériau de départ céramique en un corps cru au moyen d'un procédé de moulage par injection et frittage du corps cru en un logement en céramique (3), le logement en céramique (3) présentant une cavité (31) pourvue d'un creux,
- disposition de l'élément capteur (2) dans le logement en céramique (3) de manière telle que l'élément capteur (2) est disposé dans le creux tout en étant au moins partiellement enfoncé dans celui-ci et au moins une surface latérale (20) de l'élément capteur (2) présente un contact direct et par complémentarité de forme avec le logement en céramique (3),
- disposition des éléments de contact (4) sur des côtés opposés de l'élément capteur (2) de manière telle que les éléments de contact (4), dans une vue sur le creux, sont disposés latéralement par rapport au creux et ne pénètrent pas dans le creux.

13. Procédé selon la revendication 12, les éléments de contact (4), après la disposition de l'élément capteur (2) dans le logement en céramique (3), étant à chaque fois raccordés de manière électriquement conductrice, à l'aide d'une pâte de métallisation (5), aux électrodes (21) et les pâtes de métallisation (5) étant ensuite cuites.

14. Procédé selon l'une quelconque des revendications 12 ou 13, une ouverture (30) du logement en céramique (3) étant fermée à l'aide d'une pâte en verre (6) et la pâte en verre (6) étant ensuite cuite.
